# FASCICULE DE BREVET EUROPEEN

(11) **EP 0 495 347 B1**
(45) Date de publication et mention de la délivrance du brevet: **04.10.1995**
(21) Numéro de dépôt: 91870219.2
(22) Date de dépôt: 23.12.1991
(51) Int. Cl.: G01N 27/447

(54) **Procédé de séparation de l'hémoglobine glycosylée HB A1C par électrophorèse sur gel d'agarose**
Verfahren zum Trennen von glykosiliertem Hämoglobin HBA1C durch Agarosegelelektroforese
Method for separating glycosylated hemoglobin HB A1C by electrophoresis on agarose gel

(30) Priorité: 15.01.1991 BE 9100027
(43) Date de publication de la demande: 22.07.1992
(73) Titulaire: ANALIS S.A., B-5000 Namur (BE)
(72) Inventeur: Chevigne, Roland, B-5100 Wepion (BE); Janssen, Jacques, B-1170 Bruxelles (BE)
(74) Mandataire: Van Malderen, Michel

(56) Documents cités:
- EP-A- 0 225 867
- DE-A- 3 504 385
- US-A- 4 222 836
- US-A- 4 351 711

## Description

La présente invention concerne un procédé électrophorétique réalisé sur gel d'agarose permettant de séparer l'hémoglobine glycosylée par le glucose Hb A1c, présente dans un échantillon de sang, non seulement des hémoglobines non-glycosylées mais également des autres types d'hémoglobines glycosylées comme Hb A1a et Hb A1b par exemple, de l'hémoglobine foetale, et éventuellement d'hémoglobines anormales.

Après séparation par le procédé de l'invention, une analyse densitométrique classique permet une quantification du pourcentage de chaque type d'hémoglobine présent dans l'échantillon.

### Arrière-plan technologique

La surveillance de l'évolution du diabète d'un patient peut s'effectuer par contrôle du taux de glucose dans le sang. On sait cependant que l'évolution de celui-ci est particulièrement rapide. Les dosages de glucose ne peuvent donner que des indications ponctuelles sur la glycémie du patient, et ne reflètent donc pas l'évolution de celle-ci dans les semaines précédant l'analyse.

On sait par ailleurs que la détermination quantitative de l'hémoglobine glycosylée Hb A1 reflète la concentration du glucose sanguin moyen d'un patient sur une période de deux mois précédant la prise de sang.

Pour cette raison, les dosages d'hémoglobine glycosylée (encore appelée glyquée) sont fréquemment utilisés dans les laboratoires d'analyse médicale.

L'hémoglobine est constituée de quatre chaînes peptidiques avec un groupement hème. La principale hémoglobine du sujet adulte normal est l'hémoglobine A, constituée de deux chaînes α et de deux chaînes β.

L'hémoglobine A1c est formée par glycosylation non-enzymatique des chaînes β de l'hémoglobine A par fixation du glucose sur les extrémités NH₂ libres des valines N-terminales de chaque chaîne β.

L'analyse biochimique montre que cette fraction Hb A1c contient une mole de glucose par mole d'hémoglobine.

L'hémoglobine glycosylée totale Hb A1 comprend également les fractions A1a, A1b, A1d et A1e. La première contient du glucose-6-phosphate au lieu de glucose non phosphorylé; les trois autres sont encore actuellement mal connues, mais il ne semble pas qu'il y ait corrélation entre ces fractions et l'équilibre glycémique.

### Résumé de l'état de la technique

Différents procédés sont utilisés pour séparer les hémoglobines glycosylées.

Plusieurs méthodes chromatographiques donnent un résultat satisfaisant du point de vue du résultat obtenu mais sont généralement lentes et coûteuses.

Il est par exemple connu de pratiquer une chromatographie d'affinité en utilisant la propriété de l'hémoglobine glycosylée de se fixer à l'acide m-aminophénylborique lié à un gel d'agarose, en éluant à l'aide de deux tampons appropriés.

La chromatographie sur résine échangeuse de cations faiblement acide permet la séparation de différentes fractions d'hémoglobine par élution au moyen de tampons de force ionique et pH différents. De telles techniques sont par exemple décrites dans les brevets US-A-4,389,491 et US-A-4,407,961. Ces techniques chromatographiques sont sensibles aux variations de température et les analyses sont souvent entachées d'erreurs par des échantillons contenant de l'hémoglobine foetale (HbF) ou des hémoglobines anormales (HbS, HbC).

La chromatographie liquide haute performance (HPLC) fournit de bons résultats et il existe des analyseurs automatisés coûteux qui permettent des analyses en grande série.

Parmi les techniques électrophorétiques, il est connu de séparer électriquement les différents composants de l'hémoglobine selon leur point isoélectrique sur un gel de polyacrylamide en gradient de pH (séparation par isoélectrofocalisation); cette technique permet de détecter des hémoglobines anormales, mais l'HbF interfère avec la Hb A1 c, qui migre au même endroit; en outre un dosage densitométrique est difficilement applicable à cette technique. Il est à noter que l'interférence Hb A1c/HbF pose des problèmes en particulier pour la surveillance du diabète chez les femmes enceintes.

Le brevet US-A-4,222,836 mentionne une technique de séparation d'hémoglobines glycosylées sur gel d'agar contenant un tampon citrate. Celle-ci permet la séparation d'une part de l'hémoglobine non glycosylée Ao et d'autre part de l'ensemble des hémoglobines glycosylées Hb A1 a, b, c, qui migrent toutes au même endroit. Cette technique nécessite un contrôle rigoureux de la teneur en sulfate de l'agar utilisé.

Des résultats similaires obtenus par électrophorèse sur gel d'agar sont mentionnés dans les articles suivants: Menard L. et al., Quantitative determination of glycosylated hemoglobin A1 by agar gel electrophoresis, in Clin. Chem. 26, 1075 (1979), et Aleyassine H. et al., Agar gel electrophoretic determination of glycosylated hemoglobin: effect of variant hemoglobins, hyperlipidemia and temperature, in Clin. Chem. 27/3, 472-475 (1981).

Le brevet US-A-4 351 711 (J. AMBLER) décrit un procédé d'électrophorèse qui permet la séparation de l'hémoglobine glycosylée des autres fractions d'hémoglobine. Suivant ce document, on inclut du sulfate de dextran dans un échantillon de sang ou dans le tampon d'électrophorèse. Le support utilisé peut être un gel d'agar conventionnel ou de l'acétate de cellulose.

Les limitations de ce procédé sont soulignées par son auteur même (J. AMBLER) dans "Measurement of Glycosylated Hemoglobin on Cellulose Acetate Membranes by mobile Affinity Electrophoresis", Clin. Chem. 1983; 29:340-343: à savoir l'interférence de l'hémoglobine foetale (HbF), la non-séparation de HbA1a, HbA1b, la nécessité de colorer le gel et donc l'impossibilité de travailler sur sang total. Il faut utiliser des hémolysats de globules rouges lavés ce qui implique davantage d'étapes et énormément de main d'oeuvre.

L'article d'Aleyassine H., Determination of glycosylated hemoglobin by affinity electrophoresis on agarose gel, in Clinica Chemica Acta, 142, 123-130, (1984) décrit une technique analogue qui permet de même obtenir une séparation de l'ensemble des hémoglobines glycosylées d'avec les hémoglobines non-glycosylées. Selon le procédé décrit, on ajoute du sulfate de dextran à un gel d'agarose. Après électrophorèse, l'hémoglobine foetale migre au même endroit que l'hémoglobine glycosylée ce qui crée une interférence. HbAla et HbAlb ne sont pas séparés.

En outre, l'auteur signale dans cet article que les résultats obtenus sont fortement dépendants de la source de sulfate de dextran utilisée. La Demanderesse a d'ailleurs pu constater que des lots différents d'une même qualité de sulfate de dextran d'un même fournisseur pouvaient ne pas donner des résultats, ce qui rend cette technique difficilement exploitable.

Il n'existe donc pas actuellement à la connaissance de la Demanderesse de procédé électrophorétique qui permette d'obtenir une bonne séparation de l'hémoglobine glycosylée Hb A1c des hémoglobines non-glycosylées, et des autres types d'hémoglobines glycosylées, tout en ne présentant pas d'interférence avec des hémoglobines anormales telles que l'hémoglobine foetale HbF, et en permettant un dosage des constituants par densitométrie après la séparation électrophorétique.

### Buts visés par l'invention

L'invention a pour but de fournir un procédé électrophorétique permettant d'obtenir de tels résultats, tout en étant bon marché, pratique et facile à utiliser.

Elle a encore pour but de fournir un tel procédé qui permette également d'identifier différentes hémoglobines anormales.

Un autre but de l'invention est de fournir des trousses comprenant un gel d'agarose permettant l'exécution du procédé électrophorétique de l'invention.

### Eléments caractéristiques de l'invention

L'invention a pour objets un procédé électrophorétique de séparation de l'hémoglobine glycosylée Hb A1c des autres hémoglobines présentes dans un échantillon de sang complet ou de globules rouges, sur un gel d'agarose, dans lequel on ajoute du sulfate de chondroïtine audit gel, dans lequel on applique ensuite des hémolysats de sang complet ou de globules rouges sur ledit gel et dans lequel on soumet ledit gel à une électrophorèse.

Le sulfate de chondroïtine peut être choisi dans un groupe comprenant le sulfate de chondroïtine A, le sulfate de chondroïtine B, le sulfate de chondroïtine C et un mélange de deux ou plusieurs de ces composés.

Le sulfate de chondroïtine utilisé peut être extrait de diverses espèces animales: il en existe divers types dans le commerce qui peuvent être obtenus par exemple à partir de côte ou de peau de porc, de trachée ou de cornée de boeuf, ou de cartilages de requin ou de baleine.

Des essais d'électrophorèse avec des gels contenant ces différents types de sulfate de chondroïtine, employés seuls ou en mélange, ont donné de bons résultats, indépendamment de leur origine, et de leur poids moléculaire. L'observation des gels a permis une identification de l'hémoglobine glycosylée Hb A1c.

Le sulfate de chondroïtine peut être contenu dans un tampon d'équilibration, avantageusement à une concentration de 0,1 à 3% dudit tampon, de préférence à une concentration de 0,5 à 1% dudit tampon. Le pH de celui-ci généralement compris entre 5 et 6, de préférence entre 5,2 et 5,8.

Le tampon peut contenir un acide choisi parmi les acides maléique, phtalique, 2-3-pyridine dicarboxylique, succinique, dibromosuccinique, mucique, diglycolique, malique et adipique, et une base choisie parmi les suivantes: Tris, NaOH, KOH, D-L méthylglucamine, imidazole et pipérazine.

Il va de soi que d'autres acides et bases acceptables peuvent être utilisés.

D'une manière préférée, le sulfate de chondroïtine est ajouté à l'agarose avant solidification du gel. Le gel peut également être mis à équilibrer dans du tampon d'équilibration contenant du sulfate de chondroïtine.

On peut donc utiliser de la sorte un gel exempt de sulfate de chondroïtine, tel que par exemple un gel Beckman Paragon® SPE, pour l'identification de l'hémoglobine glycosylée Hb A1c, sans sortir du cadre de l'invention. L'équilibration dure habituellement 30 minutes.

Un autre objet de l'invention concerne une trousse pour un procédé électrophorétique de séparation d'hémoglobines selon l'invention, comprenant un gel d'agarose, un tampon d'électrophorèse et un tampon d'équilibration dans lequel ledit gel d'agarose et/ou le tampon d'équilibration comprend du sulfate de chondroïtine.

De préférence, le tampon d'électrophorèse est identique au tampon d'équilibration (mais ne contient éventuellement pas de sulfate de chondroïtine).

L'invention est illustrée par les exemples de gels électrophorétiques repris ci-dessous (exemples 1 à 7) et par un exemple de mise en oeuvre (exemple 8).

### Exemples 1 à 7 (préparation)

Des solutions standard d'agarose sont préparées de la manière suivante: 10 g d'agarose sont versés dans 830 ml d'eau distillée sous forte agitation. Le mélange est chauffé progressivement jusqu'à 95°C puis refroidi aux alentours de 55°C. Sous agitation, 170 ml d'une solution concentrée contenant un ou plusieurs acides ou substances à comportement acide, une ou plusieurs bases, et éventuellement un agent de préservation comme l'azoture de sodium par exemple sont ajoutés.

Du sulfate de chondroïtine, ainsi que des adjuvants connus permettant d'obtenir les caractéristiques de gel souhaitées (texture, rétention d'eau) sont ajoutées à ces solutions standard. Après homogénéisation, on procède au coulage des gels d'agarose (200 à 250 gels de 10 x 7,5 cm) sur un support adéquat.

| Ex. | Acide | Base | Azoture | Autre | Sulfate de chondroïtine |
|---|---|---|---|---|---|
| 1. | Maléique 8,2 g | TRIS 11,9 g | 0,59 g | - | 7,84 g |
| 2. | Malique 9,2 g | TRIS 14,5 g | 1 g | - | 6,51 g |
| 3. | Maléique 8,7 g | TRIS 11,8 g | 0,21 g | Hydrogénophtalate de potassium 1,3 g | 10 g |
| 4. | Phtalique 8,02 g | TRIS 10,8 g | 1 g | MOPSO 10,1 g | 10 g |
| 5. | 2,3 Pyridine dicarboxylique 8 g | TRIS 10,9 g | 1 g | MES 5,04 g | 8,61 g |
| 6. | Maléique 10 g | Imidazole 5,2 g | 0,4 g | Na SCN 2 g | 5,3 g |
| 7. | Maléique 5,47 g | TRIS 7,79 g | | Hydrogénophtalate de potassium 0,82 g | 6,47 g |
| | | | | Na SCN 1,5 g | |

### Exemple 8 (mise en oeuvre)

Un gel obtenu selon une des préparations décrites en exemples 1, 2, 3, est déposé sur la table, buvardé pour enlever l'excès de tampon. Des hémolysats de sang total ou de globules rouges sont appliqués selon un procédé courant en électrophorèse. Le gel est alors soumis à une électrophorèse de 50 V pendant 20 à 40 minutes ou de 100 V pendant 10 à 20 minutes en utilisant de préférence dans le tampon d'électrophorèse les acides et bases employés pour la préparation de la solution standard d'agarose pour la fabrication du gel. Après l'électrophorèse, le gel est rincé à l'eau distillée, le support de gel parfaitement essuyé, puis on procède à une lecture densitométrique à 415 nm, permettant de déceler la présence d'hémoglobines anormales et de calculer le pourcentage d'hémoglobine glycosylée HbA1c par rapport à une ou plusieurs des hémoglobines présentes dans l'échantillon.

Alternativement le gel peut être séché puis lu par densitométrie, une fois sec. Une variante peut consister à colorer le gel de façon à en permettre la lecture avec un densitomètre à faible sensibilité, ou pour en permettre l'archivage. Cette coloration peut être obtenue en utilisant un réactif colorant les protéines (en tenant compte que des protéines autres que l'hémoglobine peuvent réagir) ou un colorant spécifique de l'hémoglobine y compris les techniques mettant en oeuvre des propriétés antigène-anticorps.

Des résultats expérimentaux ont montré notamment qu'il est possible en utilisant les gels suivant l'invention de mettre en évidence sans confusion possible, des bandes bien définies correspondant aux hémoglobines suivantes: Hb Ao, méthémoglobine, Hb A1c, HbF, Hb A1b et Hb A1a.

Bien que les exemples ci-dessus illustrent des formes d'exécution avantageuses de l'invention, ils n'en limitent pas la portée.

Au cas où on dispose d'un gel pour électrophorèse ne contenant pas de sulfate de chondroïtine, par exemple d'un gel Beckman Paragon® SPE, on ne sortira pas du cadre de l'invention si on laisse équilibrer un tel gel pendant par exemple 30 minutes dans un tampon d'équilibration contenant des acides et bases tels que mentionnés dans les exemples ci-dessus, et du sulfate de chondroïtine. Bien que le procédé soit plus long, les résultats obtenus sont tout à fait similaires.

On ne sortira pas non plus du cadre de l'invention en ajoutant du sulfate de chondroïtine à un gel d'agarose contenant un autre polysaccharide sulfaté.

## Revendications

1. Procédé électrophorétique de séparation de l'hémoglobine glycosylée Hb A1c des autres hémoglobines présentes dans un échantillon de sang complet ou de globules rouges sur un gel d'agarose caractérisé en ce qu'on ajoute du sulfate de chondroïtine audit gel, en ce qu'on applique ensuite des hémolysats de sang complet ou de globules rouges sur ledit gel et en ce qu'on soumet ledit gel à une électrophorèse.

2. Procédé suivant la revendication 1 caractérisé en ce que le sulfate de chondroïtine est choisi dans un groupe comprenant le sulfate de chondroïtine A, le sulfate de chondroïtine B, le sulfate de chondroïtine C et un mélange de deux ou plusieurs de ces composés.

3. Procédé suivant l'une quelconque des revendications 1 et 2, caractérisé en ce que le sulfate de chondroïtine est contenu dans un tampon dit d'équilibration.

4. Procédé suivant la revendication 3 caractérisé en ce que le sulfate de chondroïtine est présent dans le tampon à une concentration de 0,1 à 3% dudit tampon.

5. Procédé suivant la revendication 4 caractérisé en ce que le sulfate de chondroïtine est présent dans le tampon à une concentration de 0,5 à 1% dudit tampon.

6. Procédé suivant l'une quelconque des revendications 3 à 5, caractérisé en ce que le pH du tampon est compris entre 5 et 6.

7. Procédé suivant la revendication 6 caractérisé en ce que le pH du tampon est compris entre 5,2 et 5,8.

8. Procédé suivant l'une quelconque des revendications 3 à 7, caractérisé en ce que le tampon contient un acide choisi parmi les acides maléique, phtalique, 2-3-pyridine dicarboxylique, succinique, dibromosuccinique, mucique, diglycolique, malique et adipique.

9. Procédé suivant l'une quelconque des revendications 3 à 8, caractérisé en ce que le tampon contient une base choisie parmi les suivantes: Tris, NaOH, KOH, D-L méthylglucamine, imidazole et pipérazine.

10. Procédé suivant l'une quelconque des revendications précédentes, caractérisé en ce que le sulfate de chondroïtine est ajouté à l'agarose avant solidification du gel.

11. Procédé suivant l'une quelconque des revendications 3 à 9, caractérisé en ce que le gel est mis à équilibrer dans du tampon d'équilibration contenant du sulfate de chondroïtine.

12. Procédé suivant la revendication 11 caractérisé en ce que le gel mis à équilibrer est exempt de sulfate de chondroïtine.

13. Procédé suivant l'une quelconque des revendications 11 et 12, caractérisé en ce que le gel est mis à équilibrer pendant trente minutes.

14. Trousse pour un procédé électrophorétique de séparation selon l'une quelconque des revendications précédentes 1 à 13, comprenant un gel d'agarose, un tampon d'électrophorèse et un tampon d'équilibration caractérisé en ce que ledit gel d'agarose et/ou le tampon d'équilibration comprend du sulfate de chondroïtine.

## Claims

1. Electrophoretic process for separating glycosylated haemoglobin Hb Alc from other haemoglobins present in a complete blood or erythrocyte sample on agarose gel, characterized in that chondroitin sulfate is added to said gel, hemolysates of complete blood or erythrocytes are then applied to said gel, and said gel is submitted to an electrophoresis.

2. Process according to claim 1, characterized in that the chondroitin sulfate is selected amongst a group consisting of chondroitin sulfate A, chondroitin sulfate B, chondroitin sulfate C, and a mixture of two of those compounds or more.

3. Process according to any of claims 1 and 2, characterized in that the chondroitin sulfate in contained in a so-called equilibration buffer.

4. Process according to claim 3, characterized in that the chondroitin sulfate is present in the buffer at a concentration of 0.1 to 3% of said buffer.

5. Process according to claim 4, characterized in that the chondroitin sulfate is present in the buffer at a concentration of 0.5 to 1% of said buffer.

6. Process according to any of claims 3 to 5, characterized in that the buffer pH is comprised between 5 and 6.

7. Process according to claim 6, characterized in that the buffer pH is comprised between 5.2 and 5.8.

8. Process according to claim 6, characterized in that the buffer pH is comprised between 5.2 and 5.8.

9. Process according to any of claims 3 to 7, characterized in that the buffer contains a base selected amongst the following : Tris, NaOH, D-L methylglucamine, imidazole and piperazine.

10. Process according to any of preceding claims, characterized in that the chondroitin sulfate is added to agarose before gel solidification.

11. Process according to any of claims 3 to 9, characterized in that the gel is being equilibrated in equilibration buffer containing chondroitin sulfate.

12. Process according to claim 11, characterized in that the gel being equilibreted is free of chondroitin sulfate.

13. Process according to any of claims 11 and 12, characterized in that the gel is being equilibrated for thirty minutes.

14. Kit for a separation electrophoretic process according to any of preceding claims 1 to 13, comprising an agarose gel, an electrophoresis buffer and an equilibration buffer, characterized in that said agarose gel and/or equilibration buffer comprise(s) chondroitin sulfate.

## Patentansprüche

1. Elektrophoretisches Verfahren zur Trennung des glykosylierten Hämoglobins Hb A1c von den anderen Hämoglobinen, die in einer Probe von vollständigem Blut oder von roten Blutkörperchen auf einem Agarose-Gel vorhanden sind, dadurch gekennzeichnet, daß, Chondroitinsulfat zu dem Gel hinzugegeben wird, daß, danach Hämolysate von vollständigem Blut oder von roten Blutkörperchen auf das Gel aufgebracht werden, und daß, das Gel einer Elektrophorese unterworfen wird.

2. Verfahren gemäß Anspruch 1, dadurch gekennzeichnet, daß das Chondroitinsulfat aus einer Gruppe ausgewählt wird, die Chondroitinsulfat A, Chondroitinsulfat B, Chondroitinsulfat C, und ein Gemisch aus zwei oder mehreren dieser Verbindungen enthält.

3. Verfahren gemäß irgendeinem der Ansprüche 1 und 2, dadurch gekennzeichnet, daß das Chondroitinsulfat in einem sogenannten Äquilibrationspuffer enthalten ist.

4. Verfahren gemäß Anspruch 3, dadurch gekennzeichnet, daß das Chondroitinsulfat in dem Puffer in einer Konzentration von 0,1 bis 3% des Puffers vorhanden ist.

5. Verfahren gemäß Anspruch 4, dadurch gekennzeichnet, daß das Chondroitinsulfat in dem Puffer in einer Konzentration von 0,5 bis 1% des Puffers vorhanden ist.

6. Verfahren gemäß irgendeinem der Ansprüche 3 bis 5, dadurch gekennzeichnet, daß der pH des Puffers zwischen 5 und 6 liegt.

7. Verfahren gemäß Anspruch 6, dadurch gekennzeichnet, daß der pH des Puffers zwischen 5,2 und 5,8 liegt.

8. Verfahren gemäß irgendeinem der Ansprüche 3 bis 7, dadurch gekennzeichnet, daß der Puffer eine Säure enthält, die aus Maleinsäure, Phthalsäure, 2-3-Pyridin-dicarbonsäure, Succinsäure, Dibromsuccinsäure, Muzinsäure, Diglykolsäure, Apfelsäure und Adipinsäure ausgewählt wird.

9. Verfahren gemäß irgendeinem der Ansprüche 3 bis 8, dadurch gekennzeichnet, daß der Puffer eine Base enthält, die aus den folgenden Basen: Tris, NaOH, KOH, D-L-Methylglucamin, Imidazol und Piperazin ausgewählt wird.

10. Verfahren gemäß irgendeinem der vorhergehenden Ansprüche, dadurch gekennzeichnet, daß das Chondroitinsulfat vor der Verfestigung des Gels zu der Agarose hinzugegeben wird.

11. Verfahren gemäß irgendeinem der Ansprüche 3 bis 9, dadurch gekennzeichnet, daß das Gel in Äquilibrationspuffer, der Chondroitinsulfat enthält, äquilibriert wird.

12. Verfahren gemäß Anspruch 11, dadurch gekennzeichnet, daß das Gel, das äquilibriert wird, frei von Chondroitinsulfat ist.

13. Verfahren gemäß irgendeinem der Ansprüche 11 und 12, dadurch gekennzeichnet, daß das Gel während dreißig Minuten äquilibriert wird.

14. Ausrüstung für ein elektrophoretisches Trennverfahren gemäß irgendeinem der vorhergehenden Ansprüche 1 bis 13, die ein Agarose-Gel, einen Elektrophoresepuffer und einen Äquilibrationspuffer aufweist, dadurch gekennzeichnet, daß das Agarose-Gel und/oder der Äquilibrationspuffer Chondroitinsulfat aufweist.
